# EUROPEAN PATENT SPECIFICATION

(11) **EP 2 813 097 B1**
(45) Date of publication and mention of the grant of the patent: **03.04.2019**
(21) Application number: 13707942.2
(22) Date of filing: 08.02.2013
(51) Int. Cl.: H04L 1/18, H04W 60/00, H04W 88/06

(54) **APPARATUS AND METHOD OF COMMUNICATING OVER MULTIPLE SUBSCRIPTIONS**
VORRICHTUNG UND VERFAHREN ZUR KOMMUNIKATION ÜBER MEHRERE ABONNEMENTS
APPAREIL ET PROCÉDÉ PERMETTANT DE COMMUNIQUER AVEC DE MULTIPLES ABONNEMENTS

(30) Priority: 10.02.2012 US 201261597566 P; 27.07.2012 US 201213559990
(43) Date of publication of application: 17.12.2014
(73) Proprietor: QUALCOMM INCORPORATED, San Diego, California 92121 (US)
(72) Inventor: MOHSENI, Jafar, San Diego, CA 92121 (US); O'SHEA, Helena, Deirdre, San Diego, CA 92121 (US); ROBINSON, Nigel, Phillip, San Diego, CA 92121 (US); MOUNA-KINGUE, Michel, San Diego, CA 92121 (US); HSU, Chih-Ping, San Diego, CA 92121 (US); JEENAGALA, Rajagopal, San Diego, CA 92121 (US)
(74) Representative: Dunlop, Hugh Christopher
(86) International application number: PCT/US2013/025349
(87) International publication number: WO 2013/119953

(56) References cited:
- US-A1- 2003 152 044
- US-A1- 2011 096 706

## Description

### BACKGROUND

### Field

Aspects of the present disclosure relate generally to wireless communication systems, and more particularly to processing communications related to multiple device subscriptions.

### Background

Wireless communication networks are widely deployed to provide various communication services such as telephony, video, data, messaging, broadcasts, and so on. Such networks, which are usually multiple access networks, support communications for multiple users by sharing the available network resources. One example of such a network is the UMTS Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). The UMTS, which is the successor to Global System for Mobile Communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD-SCDMA). The UMTS also supports enhanced 3G data communications protocols, such as High Speed Packet Access (HSPA), which provides higher data transfer speeds and capacity to associated UMTS networks.

In some wireless networks, a user equipment (UE) can have subscriptions to multiple networks (*e.g*., by employing multiple subscriber identity module (SIM) cards or otherwise). Where the UE utilizes a single transceiver to communicate over the multiple networks, the UE can tune the transceiver to a given period of time to communicate therewith, but can only communicate in a single network at a given period of time. Thus, when the UE has an active call with one network, it terminates the call with the network to communicate with another network, or otherwise ignores signals from the other network until the call is complete.

US 2011096706 A1 concerns methods and apparatus enabling a mobile device to receive paging notifications from multiple networks.

US 2003152044 A1 concerns a method of monitoring a paging channel from one wireless network during an active communications session with another wireless network.

### SUMMARY

Aspects of the present invention are defined by the accompanying claims. According to a first aspect there is provided a method for communicating with multiple networks using multiple subscriptions in accordance with claim 1. According to a second aspect, there is provided a user equipment apparatus for communicating with multiple networks using multiple subscriptions in accordance with claim 9. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with one or more aspects and corresponding disclosure thereof, the present disclosure describes various aspects in connection with a user equipment (UE) employing a single transceiver to communicate in one or more networks while in an active call with another network. For example, though the UE is in the active call, it can briefly tune the single transceiver to one or more networks during a determined gap to receive idle-mode signals from the one or more networks, while tuning the transceiver back to the network with the active call after the gap or once a signal is received in the one or more networks. The determined gap can be a small period of time, and the network with the active call can handle interruption caused by the temporary tuning away as it would other brief interruptions in service (*e.g*., other types of signal fading or degradation). For example, this can include requesting retransmission of any lost blocks. Thus the active call need not be terminated and reestablished to receive the signals in the one or more networks.

In one aspect, a method for communicating with multiple networks using multiple subscriptions is provided that includes establishing a call in a first network related to a first subscription over a transceiver and autonomously tuning the transceiver to a frequency of a second network related to a second subscription within a defined gap during the call. The method also includes monitoring one or more channels in the second network during the gap for one or more idle-mode signals.

In another aspect, a computer program product for communicating with multiple networks using multiple subscriptions is provided. The computer program product includes a non-transitory computer-readable medium having code for causing at least one computer to establish a call in a first network related to a first subscription over a transceiver. The non-transitory computer-readable medium further includes code for causing the at least one computer to autonomously tune the transceiver to a frequency of a second network related to a second subscription within a defined gap during the call and code for causing the at least one computer to monitor one or more channels in the second network during the defined gap for one or more idle-mode signals.

Still another aspect includes a UE apparatus for communicating with multiple networks using multiple subscriptions. The UE apparatus includes means for establishing a call in a first network related to a first subscription over a transceiver, means for autonomously tuning the transceiver to a frequency of a second network related to a second subscription within a defined gap during the call, and means for monitoring one or more channels in the second network during the defined gap for one or more idle-mode signals.

Further, a UE apparatus for communicating with multiple networks using multiple subscriptions is provided in another aspect including at least one processor and a memory coupled to the at least one processor. The at least one processor is configured to establish a call in a first network related to a first subscription over a transceiver, autonomously tune the transceiver to a frequency of a second network related to a second subscription within a defined gap during the call, and monitor one or more channels in the second network during the defined gap for one or more idle-mode signals.

These and other aspects of the disclosure will become more fully understood upon a review of the detailed description, which follows.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
Fig. 1 is a schematic block diagram of one aspect of a system for communicating with multiple networks related to multiple subscriptions;
Fig. 2 is a diagram of an example transceiver timeline for tuning between a call in a first network and idle-mode signal periods in a second network;
Fig. 3 is an example methodology for communicating with a network during an active call in another network;
Fig. 4 is a schematic block diagram of one aspect of a system for monitoring idle-mode signals of a network while in an active call in another network;
Fig. 5 is a block diagram illustrating an example of a hardware implementation for aspects described herein employing a processing system;
Fig. 6 is a block diagram conceptually illustrating an example of a telecommunications system including aspects described herein;
Fig. 7 is a conceptual diagram illustrating an example of an access network including aspects of aspects described herein;
Fig. 8 is a conceptual diagram illustrating an example of a radio protocol architecture for the user and control plane implemented by components of aspects described herein; and
Fig. 9 is a block diagram conceptually illustrating an example of a Node B in communication with a UE in a telecommunications system, including aspects described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

The apparatus and methods described herein relate to a user equipment (UE) using a single transceiver communicating in multiple networks, though the UE may be in an active call on one network. In an example, during the active call, the UE can autonomously tune the transceiver to another network to monitor resources for receiving idle-mode signals during one or more gaps. For example, the UE can determine the gaps based at least on one or more hardcoded or configured parameters, as discussed further herein (*e.g*., configuration information regarding a subscription related to the network, such as an indicated or otherwise determined timing cycle, duration, *etc.* related to transmission of the idle-mode signals). Following expiration of the gaps, the UE can tune the transceiver back to the network with the active call. For example, any interruption in service caused by tuning the transceiver to another network can be handled as other temporary losses in service (*e.g*., by requesting retransmission of any lost packets). Thus, the active call need not be terminated to receive signals from other networks at the UE.

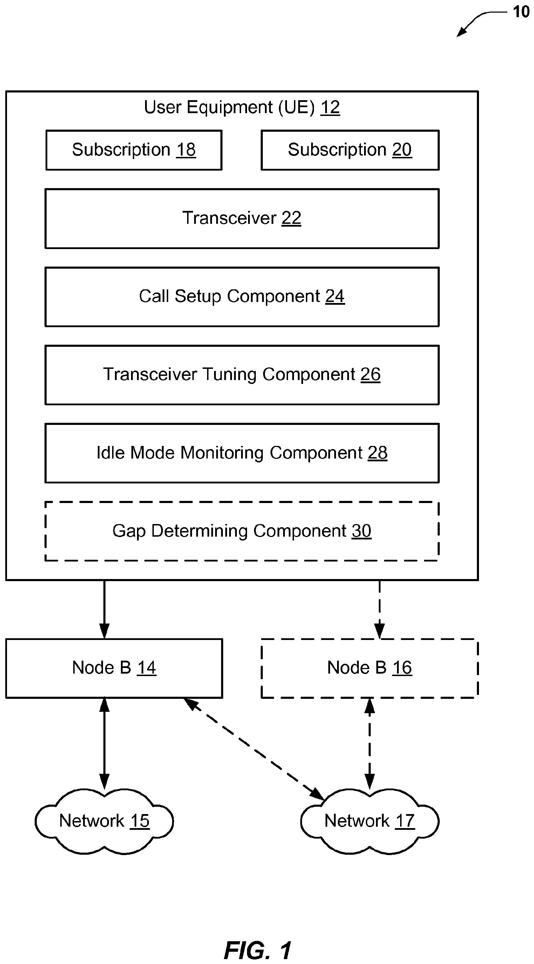

Referring to Fig. 1, in one aspect, a wireless communication system 10 includes a user equipment (UE) 12 for communicating in a wireless network. For example, the UE 12 can communicate with a Node B 14 and/or 16 utilizing multiple subscriptions to multiple networks. For example, UE 12 can at least communicate in a network 15 using Node B 14. Moreover, UE 12 can communicate in a network 17 using Node B 14 and/or a different Node B, such as Node B 16. In one example, networks 15 and 17 can use the same or different radio access technologies (RAT) to facilitate communicating with UEs. For example, the UE 12 can have a subscription 18 related to network 15 and subscription 20 related to network 17. Node Bs 14 and 16 can each be a macrocell, picocell, femtocell, relay, mobile Node B, UE (*e.g*., communicating in peer-to-peer or ad-hoc mode with UE 12), or substantially any type of component that can communicate with UE 12 to provide wireless network access *via* a subscription at the UE 12.

UE 12 can include a transceiver 22 for transmitting and/or receiving signals to one or more Node Bs or other devices in a wireless network, a call setup component 24 for establishing a call in a wireless network, a transceiver tuning component 26 for switching an operating frequency of transceiver 22 to communicate in other networks, and an idle mode monitoring component 28 for processing paging signals received in one or more wireless networks. UE 12 optionally includes a gap determining component 30 for determining one or more gaps during which transceiver tuning component 26 can tune transceiver 22 to one or more networks.

According to an example, call setup component 24 can establish a call over a first network, network 15, related to subscription 18 *via* Node B 14. For example, UE 12 and Node B 14 can establish a connection to facilitate communicating in network 15. Communications between UE 12 and Node B 14 can occur over logical channels, as described herein for example. UE 12 can activate the call based on requesting call establishment from Node B 14, receiving a page for an incoming call from Node B 14, *etc.* Moreover, the call can be a voice call where network 15 is a circuit-switched (CS) network, a data call (*e.g.,* voice over internet protocol (VoIP) or similar technologies) where the network 15 is a packet-switched (PS) network, and/or the like.

During the active call, transceiver tuning component 26 can tune transceiver 22 to a frequency of a second network, network 17, related to subscription 20 for a period of time, referred to herein as a gap. The gap can be defined for possibly receiving idle-mode signals in the network 17. During the gap, idle mode monitoring component 28 can process signals received at transceiver 22 to determine whether the signals relate to idle-mode signals, such as paging signals, intended for UE 12. In an example, Node B 14 can facilitate communicating with network 17 over the related frequency as well, in which case idle mode monitoring component 28 can determine whether idle-mode signals are received during the gap from Node B 14 corresponding to network 17. In another example, Node B 16 can provide access to network 17, and thus idle mode monitoring component 28 can determine whether idle-mode signals are received during the gap from Node B 16 corresponding to the network 17. Idle-mode signals can relate to substantially any signal broadcast in network 17, such as paging signals, broadcast control channel (BCCH) signals, or other signals that can correlate to mobility of UE 12 or otherwise.

Following expiration of the gap, transceiver tuning component 26 can tune transceiver 22 back to a frequency related to network 15 (*e.g.,* an operating frequency thereof) to continue the call *via* Node B 14. Where idle mode monitoring component 28 receives an idle-mode signal from network 17 during the gap, UE 12 can perform further processing of the idle-mode signal, such as identifying the network 17, determining whether the idle-mode signal relates to subscription 20 at UE 12, presenting a notification on the UE 12 based on the idle-mode signal, *etc.* For instance, where the idle-mode signal is a paging signal related to a call on network 17, UE 12 can display an option for activating communications with the network 17 (*e.g.,* to establish the call related to the paging signal on the network 17 and/or terminate or hold the active call on the network 15). A user of the UE 12 can select this option if desired, which can cause transceiver tuning component 26 to tune transceiver 22 to network 17 for communicating in an active mode thereover, and to switch the connection with network 15 to idle-mode. In addition, for example, gap determining component 30 can similarly define gaps in communication with network 17 to allow transceiver tuning component 26 to tune transceiver 22 to network 15 for monitoring idle-mode signals therefrom by idle mode monitoring component 28 (*e.g.,* based on paging cycle information determined and/or otherwise received for network 15).

In one example, gap determining component 30 can determine the gaps for monitoring resources of network 17 for receiving idle-mode signals related thereto. For example, gap determining component 30 can determine the gaps based on one or more hardcoded or otherwise configured parameters. In an example, the parameters can include data related to subscription 20, data received at UE 12 when establishing a connection with network 17 based on subscription 20, data received when establishing a connection with network 15, and/or the like.

For example, gap determining component 30 can receive an indication from network 17, upon establishing connection therewith, specifying time cycles, or at least a starting time for a first cycle, during which the network 17 may send idle-mode signals to UE 12. Gap determining component 30 can accordingly define the related gaps in a timing of the network 15 based on the specified time cycles related to network 17 such that the gap is aligned in the timing of network 15 for monitoring channels of network 17 during appropriate time cycles. In another example, gap determining component 30 can define the gaps based on hardcoded or otherwise configured parameters at UE 12, such as a known timing cycle for network 17, a known timing cycle duration of network 17, *etc.* Furthermore, for example, gap determining component 30 can determine duration of the gaps based in part on signal conditions at network 17 (*e.g.* Node B 14 or 16), based on other factors in the transceiver 22 that affect the time for tuning to the network 17 and retuning to network 15 following the time cycles, *etc.* In any case, transceiver tuning component 26 autonomously tunes the transceiver 22 to network 17 during the defined gaps. Autonomous tuning can include tuning the transceiver 22 during the gaps without assistance from Node B 14 or network 15, and/or without first notifying either of Node B 14 or network 15.

When transceiver tuning component 26 tunes transceiver 22 away from the frequency of network 15 during the gap, interruption of the call can result during the gap. Transceiver 22 can handle the interruption as it would another temporary loss of reception, such as losses occurring when UE 12 has a faded signal or other degradation. In one example, recovery from the interruption can thus include securing of data blocks lost during the gap by requesting retransmission thereof (*e.g.,* at a radio link control (RLC) layer of transceiver 22 and/or the like). In this example, the transceiver 22 need not be modified to handle the call interruption, and typical RLC procedures can be used as recovery. For instance, in one aspect, UE 12 may cause transceiver 22 to transmit a non-acknowledgment (NAK) message to network 15 to trigger the retransmission at the RLC layer.

In addition, any loss in throughput resulting from tuning away from network 15 during the call can be significantly less than other mechanisms for communicating in the multiple networks. For example, as described, one mechanism for communicating in multiple networks can terminate the call on network 15 before transceiver tuning component 26 tunes transceiver 22 to the frequency of network 17, and then reestablish the call once the transceiver tuning component 26 tunes the transceiver 22 back to the frequency of network 15. In this example, data lost during time consuming procedures for establishing the call (*e.g.,* protocol handshakes between the UE and the network) can be greater than those lost during the gaps described above. In the examples above, however, the UE 12 maintains an uplink connection to network 15 during the monitoring of channels in network 17, and thus need not reestablish connection to the network 15 following the measurement gaps.

In one specific example, subscription 18 and network 15 can relate to an HSPA network, and subscription 20 and network 17 to a GSM network. As mentioned above, however, it should be noted that in other examples network 15 and network 17 may be a same type of communication technology network. In any case, in this specific example, call setup component 24 can setup a call over the HSPA network 15 (*e.g., via* Node B 14). Transceiver tuning component 26 can tune transceiver 22 to a frequency of the GSM network 17 during one or more gaps to monitor resources for receiving paging signals for any incoming calls. Assuming a timing cycle for paging signals (also referred to as a paging cycle) of 470 milliseconds (ms) for the GSM network 17 (which can be received in subscription 20, during establishing a connection to the GSM network 17 based on subscription 20, *etc.*), gap determining component 30 can determine a gap every 470 ms. Thus, transceiver tuning component 26 can tune transceiver 22 from the HSPA network 15 to the GSM network 17 every 470 ms for a duration related to the paging cycle in an attempt to receive paging signals from the GSM network 17 during the call on the HSPA network 15.

Moreover, for example, the duration of the gaps can vary depending on the signal conditions of the GSM network 17 and/or other factors in the transceiver 22 that affect a time for tuning away to GSM network 17 and retuning transceiver 22 to the HSPA network 15, as described above. It is to be appreciated gaps for other idle-mode signals can be used as well, such as for signals of a BCCH, other signals for maintaining mobility for the GSM subscription 20 in this example, *etc.*

Also, subscriptions 18 and 20 can correspond to subscriber identity module (SIM) cards installed in the UE 12. For example, each SIM card can include subscription data or other data related to establishing a connection to a corresponding network 15 or 17 and/or for communicating in the network 15 or 17. Though two subscriptions are shown, it is to be appreciated that UE 12 can operate using additional subscriptions (*e.g*., and/or SIM cards) based on the concepts described herein.

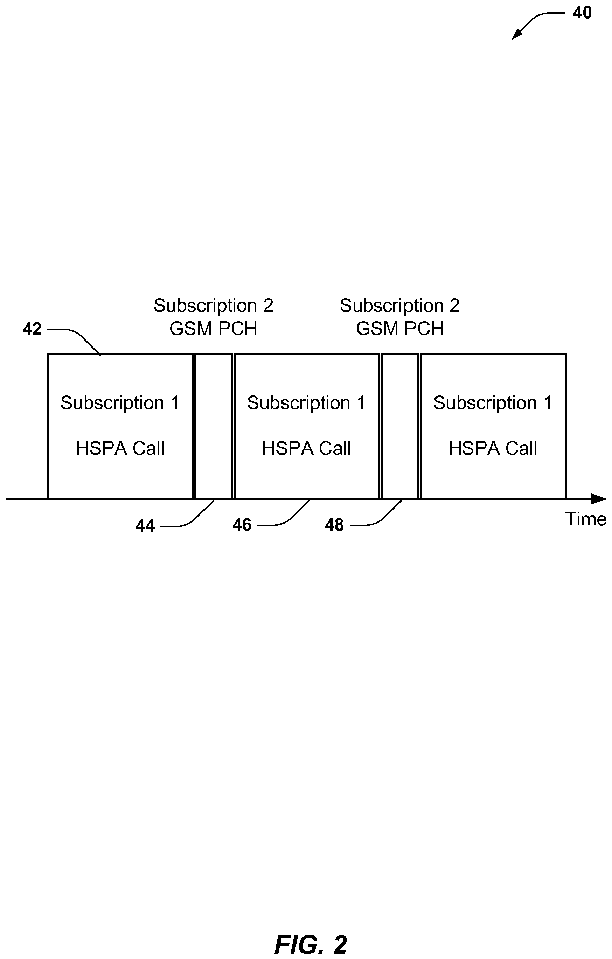

In Fig. 2, an example timeline 40 related to tuning of a single transceiver at a UE is shown. At 42, the transceiver can be tuned to a HSPA call according to a first subscription, subscription 1, of the UE. During the call, the transceiver can tune to a GSM network according to second subscription, subscription 2, to monitor one or more paging channels (PCH) thereof during the gap at 44. The duration of gap 44, as described, can be defined according to a paging cycle or other time duration defined for receiving the PCH at the GSM network, which can be defined by the GSM subscription, further defined or modified based on one or more aspects of the transceiver (*e.g*., signal quality or throughput at networks related to the first or second subscription) or received parameters regarding the paging cycle duration and/or a starting time, *etc.*

Following gap 44, the transceiver tunes back to the HSPA call at 46. Again, the transceiver can tune to the GSM network at 48, and then back to the HSPA call. In one example, a paging cycle of the GSM network can occur every 470 ms, as described above, and thus, the gap at 44 can begin at 470 ms, where the start of the HSPA call at 42 occurs at 0 ms. Then, the next gap at 48 can begin at 940 ms, and so on, until the call is terminated. As described, the UE can treat the gaps 44 and 48 (and any subsequent gaps) as a temporary loss of reception during the HSPA call.

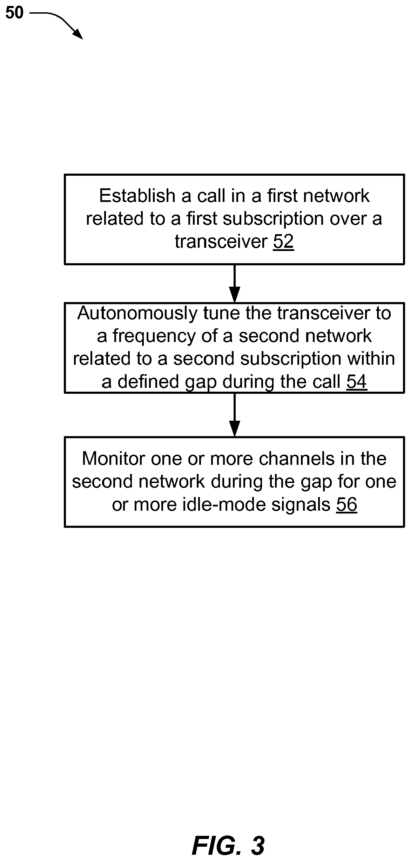

Fig. 3 illustrates an example methodology relating to communicating over multiple subscriptions using a single transceiver. While, for purposes of simplicity of explanation, the methodology is shown and described as a series of acts, it is to be understood and appreciated that the methodology is not limited by the order of acts, as some acts may, in accordance with one or more embodiments, occur concurrently with other acts and/or in different orders from that shown and described herein. For example, it is to be appreciated that a methodology could alternatively be represented as a series of interrelated states or events, such as in a state diagram. Moreover, not all illustrated acts may be required to implement a methodology in accordance with one or more embodiments.

Referring to Fig. 3, in one aspect, a methodology 50 of communicating with multiple networks is depicted.

At 52, a call can be established in a first network related to a first subscription over a transceiver. For example, this can include initiating a call establishment procedure in the network, which can be based on receiving a request for initiating a call, receiving a paging signal in the first network, and/or the like.

At 54, the transceiver can be autonomously tuned to a frequency of a second network related to a second subscription within a defined gap during the call. The gap can be defined, for example, based on hardcoded and/or configured parameters, data related to the second subscription, data acquired during establishing a connection to the second network based on the second subscription, and/or the like. In one example, the gap is defined according to information regarding a timing cycle, a starting time, *etc.* for receiving idle-mode signals in the second network. Following the gap, for example, the transceiver can be tuned back to a frequency of the first network to continue the call.

At 56, one or more channels in the second network can be monitored during the gap for one or more idle-mode signals. Thus, the transceiver may receive idle-mode signals (*e.g.,* a PCH, BCCH, *etc.*) over a channel at the second network. Any received signals can be processed, as described herein, to notify of the signal in the second network. In addition, for example, notification of a paging signal received in the second network can be displayed to allow selection of the second network over the first network for active communications, and/or the like.

It will be appreciated that, in accordance with one or more aspects described herein, inferences can be made regarding determining gaps (*e.g*., when to start a gap, a duration of the gap, *etc.*), and/or the like, as described. As used herein, the term to "infer" or "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

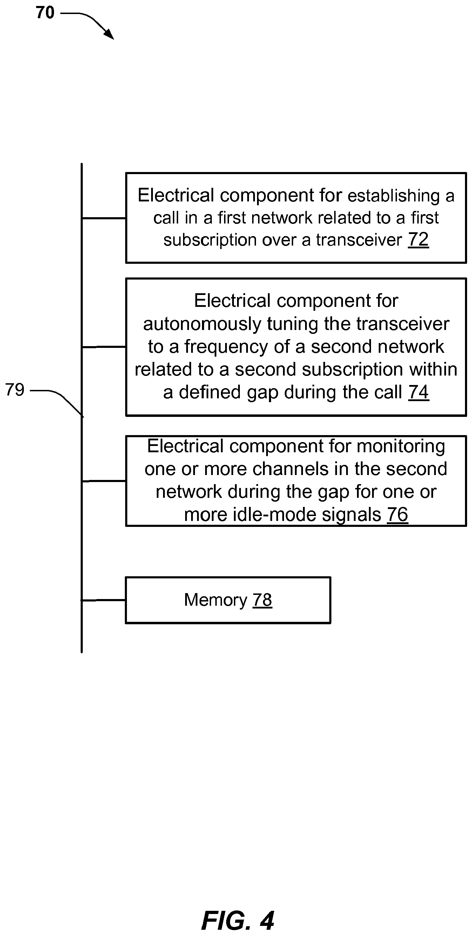

Fig. 4 illustrates an example system 70 for communicating with multiple networks related to multiple subscriptions. It is to be appreciated that system 70 is represented as including functional blocks, which can be functional blocks that represent functions implemented by a processor, software, or combination thereof (*e.g.,* firmware). System 70 includes an electrical component for establishing a call in a first network 72, an electrical component for autonomously tuning the transceiver to a frequency of a second network related to a second subscription within a defined gap during the call 74, and an electrical component for monitoring one or more channels in the second network during the gap for one or more idle-mode signals 76.

Moreover, for example, electrical component 72 can include a call setup component 24, electrical component 74 can include a transceiver tuning component 26, electrical component 76 can include an idle mode monitoring component 28, and/or the like. Additionally, system 70 can include a memory 78 that retains instructions for executing functions associated with the electrical components 72, 74, and 76. While shown as being external to memory 78, it is to be understood that one or more of the electrical components 72, 74, and 76 can exist within memory 78. Electrical components 72, 74, and 76, in an example, can be interconnected over a bus 79 or similar connection to allow communication among the components.

In one example, electrical components 72, 74, and 76 can comprise at least one processor, or each electrical component 72, 74, and 76 can be a corresponding module of at least one processor. Moreover, in an additional or alternative example, electrical components 72, 74, and 76 can be a computer program product comprising a computer readable medium, where each electrical component 72, 74, and 76 can be corresponding instructions.

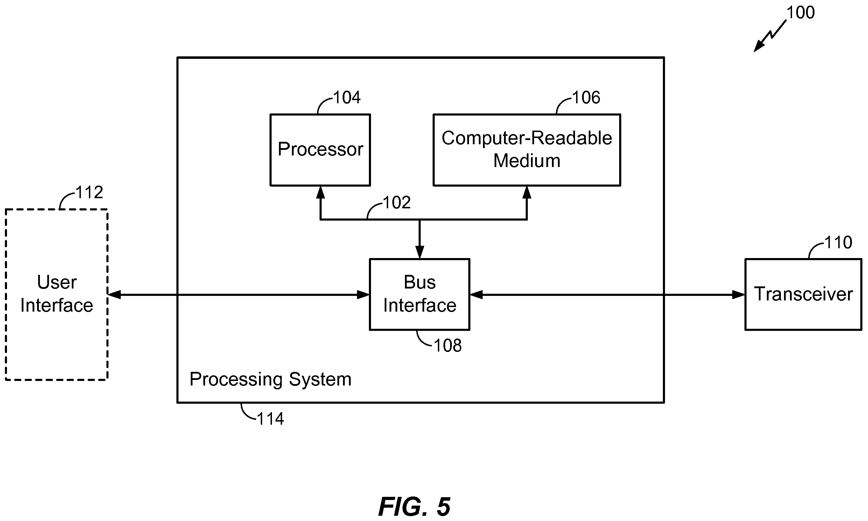

Fig. 5 is a block diagram illustrating an example of a hardware implementation for an apparatus 100 employing a processing system 114. For example, apparatus 100 may be specially programmed or otherwise configured to operate as UE 12, as described above. In this example, the processing system 114 may be implemented with a bus architecture, represented generally by the bus 102. The bus 102 may include any number of interconnecting buses and bridges depending on the specific application of the processing system 114 and the overall design constraints. The bus 102 links together various circuits including one or more processors, represented generally by the processor 104, and computer-readable media, represented generally by the computer-readable medium 106. The bus 102 may also link various other circuits such as timing sources, peripherals, voltage regulators, and power management circuits, which are well known in the art, and therefore, will not be described any further. A bus interface 108 provides an interface between the bus 102 and a transceiver 110. The transceiver 110 provides a means for communicating with various other apparatus over a transmission medium. Depending upon the nature of the apparatus, a user interface 112 (*e.g.,* keypad, display, speaker, microphone, joystick) may also be provided.

The processor 104 is responsible for managing the bus 102 and general processing, including the execution of software stored on the computer-readable medium 106. The software, when executed by the processor 104, causes the processing system 114 to perform the various functions described infra for any particular apparatus. The computer-readable medium 106 may also be used for storing data that is manipulated by the processor 104 when executing software.

In an aspect, for example, processor 104 and/or computer-readable medium 106 may be specially programmed or otherwise configured to operate as UE 12, as described above. In one example, processor 104 can execute instructions associated with components of UE 12 (which may be stored on computer-readable medium 106 in an example) to operate transceiver 110 in multiple networks for receiving idle-mode signals in one network during an active call of another network, as described. Thus, for example, transceiver 110 can be similar to transceiver 22.

The various concepts presented throughout this disclosure may be implemented across a broad variety of telecommunication systems, network architectures, and communication standards.

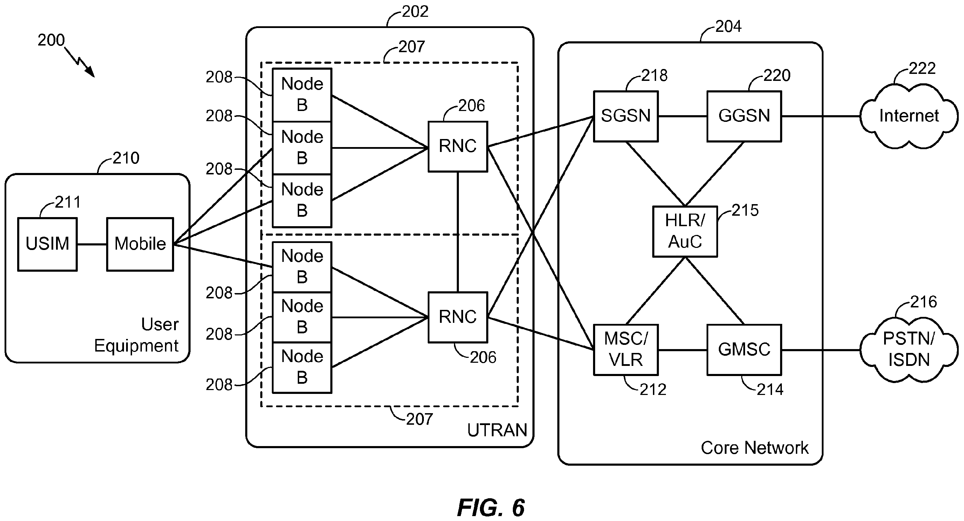

By way of example and without limitation, the aspects of the present disclosure illustrated in Fig. 6 are presented with reference to a UMTS system 200 employing a W-CDMA air interface. A UMTS network includes three interacting domains: a Core Network (CN) 204, a UMTS Terrestrial Radio Access Network (UTRAN) 202, and User Equipment (UE) 210. In this example, the UTRAN 202 provides various wireless services including telephony, video, data, messaging, broadcasts, and/or other services. The UTRAN 202 may include a plurality of Radio Network Subsystems (RNSs) such as an RNS 207, each controlled by a respective Radio Network Controller (RNC) such as an RNC 206. Here, the UTRAN 202 may include any number of RNCs 206 and RNSs 207 in addition to the RNCs 206 and RNSs 207 illustrated herein. The RNC 206 is an apparatus responsible for, among other things, assigning, reconfiguring and releasing radio resources within the RNS 207. The RNC 206 may be interconnected to other RNCs (not shown) in the UTRAN 202 through various types of interfaces such as a direct physical connection, a virtual network, or the like, using any suitable transport network.

Communication between a UE 210 and a Node B 208 may be considered as including a physical (PHY) layer and a medium access control (MAC) layer. Further, communication between a UE 210 and an RNC 206 by way of a respective Node B 208 may be considered as including a radio resource control (RRC) layer. In the instant specification, the PHY layer may be considered layer 1; the MAC layer may be considered layer 2; and the RRC layer may be considered layer 3. Information hereinbelow may utilize terminology introduced in 3GPP RRC Protocol Specification. Further, for example, UE 210 may be specially programmed or otherwise configured to operate as UE 12, as described above.

The geographic region covered by the RNS 207 may be divided into a number of cells, with a radio transceiver apparatus serving each cell. A radio transceiver apparatus is commonly referred to as a Node B in UMTS applications, but may also be referred to by those skilled in the art as a base station (BS), a base transceiver station (BTS), a radio base station, a radio transceiver, a transceiver function, a basic service set (BSS), an extended service set (ESS), an access point (AP), or some other suitable terminology. For clarity, three Node Bs 208 are shown in each RNS 207; however, the RNSs 207 may include any number of wireless Node Bs. The Node Bs 208 provide wireless access points to a CN 204 for any number of mobile apparatuses. Examples of a mobile apparatus include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (*e.g.,* MP3 player), a camera, a game console, or any other similar functioning device. The mobile apparatus is commonly referred to as a UE in UMTS applications, but may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a terminal, a user agent, a mobile client, a client, or some other suitable terminology. In a UMTS system, the UE 210 may further include a universal subscriber identity module (USIM) 211, which contains a user's subscription information to a network. In one example, UE 210 can include multiple USIMs 211, as described, each having subscription data (*e.g.,* related to subscription 18 and/or 20) for communicating in one of multiple UTRANs 202 or other networks. For illustrative purposes, one UE 210 is shown in communication with a number of the Node Bs 208. The DL, also called the forward link, refers to the communication link from a Node B 208 to a UE 210, and the UL, also called the reverse link, refers to the communication link from a UE 210 to a Node B 208.

The CN 204 interfaces with one or more access networks, such as the UTRAN 202. As shown, the CN 204 is a GSM core network. However, as those skilled in the art will recognize, the various concepts presented throughout this disclosure may be implemented in a RAN, or other suitable access network, to provide UEs with access to types of CNs other than GSM networks.

The CN 204 includes a circuit-switched (CS) domain and a packet-switched (PS) domain. Some of the circuit-switched elements are a Mobile services Switching Centre (MSC), a Visitor location register (VLR) and a Gateway MSC. Packet-switched elements include a Serving GPRS Support Node (SGSN) and a Gateway GPRS Support Node (GGSN). Some network elements, like EIR, HLR, VLR and AuC may be shared by both of the circuit-switched and packet-switched domains. In the illustrated example, the CN 204 supports circuit-switched services with a MSC 212 and a GMSC 214. In some applications, the GMSC 214 may be referred to as a media gateway (MGW). One or more RNCs, such as the RNC 206, may be connected to the MSC 212. The MSC 212 is an apparatus that controls call setup, call routing, and UE mobility functions. The MSC 212 also includes a VLR that contains subscriber-related information for the duration that a UE is in the coverage area of the MSC 212. The GMSC 214 provides a gateway through the MSC 212 for the UE to access a circuit-switched network 216. The GMSC 214 includes a home location register (HLR) 215 containing subscriber data, such as the data reflecting the details of the services to which a particular user has subscribed. The HLR is also associated with an authentication center (AuC) that contains subscriber-specific authentication data. When a call is received for a particular UE, the GMSC 214 queries the HLR 215 to determine the UE's location and forwards the call to the particular MSC serving that location.

The CN 204 also supports packet-data services with a serving GPRS support node (SGSN) 218 and a gateway GPRS support node (GGSN) 220. GPRS, which stands for General Packet Radio Service, is designed to provide packet-data services at speeds higher than those available with standard circuit-switched data services. The GGSN 220 provides a connection for the UTRAN 202 to a packet-based network 222. The packet-based network 222 may be the Internet, a private data network, or some other suitable packet-based network. The primary function of the GGSN 220 is to provide the UEs 210 with packet-based network connectivity. Data packets may be transferred between the GGSN 220 and the UEs 210 through the SGSN 218, which performs primarily the same functions in the packet-based domain as the MSC 212 performs in the circuit-switched domain.

An air interface for UMTS may utilize a spread spectrum Direct-Sequence Code Division Multiple Access (DS-CDMA) system. The spread spectrum DS-CDMA spreads user data through multiplication by a sequence of pseudorandom bits called chips. The "wideband" W-CDMA air interface for UMTS is based on such direct sequence spread spectrum technology and additionally calls for a frequency division duplexing (FDD). FDD uses a different carrier frequency for the UL and DL between a Node B 208 and a UE 210. Another air interface for UMTS that utilizes DS-CDMA, and uses time division duplexing (TDD), is the TD-SCDMA air interface. Those skilled in the art will recognize that although various examples described herein may refer to a W-CDMA air interface, the underlying principles may be equally applicable to a TD-SCDMA air interface.

An HSPA air interface includes a series of enhancements to the 3G/W-CDMA air interface, facilitating greater throughput and reduced latency. Among other modifications over prior releases, HSPA utilizes hybrid automatic repeat request (HARQ), shared channel transmission, and adaptive modulation and coding. The standards that define HSPA include HSDPA (high speed downlink packet access) and HSUPA (high speed uplink packet access, also referred to as enhanced uplink, or EUL).

HSDPA utilizes as its transport channel the high-speed downlink shared channel (HS-DSCH). The HS-DSCH is implemented by three physical channels: the high-speed physical downlink shared channel (HS-PDSCH), the high-speed shared control channel (HS-SCCH), and the high-speed dedicated physical control channel (HS-DPCCH).

Among these physical channels, the HS-DPCCH carries the HARQ ACK/NACK signaling on the uplink to indicate whether a corresponding packet transmission was decoded successfully. That is, with respect to the downlink, the UE 210 provides feedback to the node B 208 over the HS-DPCCH to indicate whether it correctly decoded a packet on the downlink.

HS-DPCCH further includes feedback signaling from the UE 210 to assist the node B 208 in taking the right decision in terms of modulation and coding scheme and precoding weight selection, this feedback signaling including the CQI and PCI.

"HSPA Evolved" or HSPA+ is an evolution of the HSPA standard that includes MIMO and 64-QAM, enabling increased throughput and higher performance. That is, in an aspect of the disclosure, the node B 208 and/or the UE 210 may have multiple antennas supporting MIMO technology. The use of MIMO technology enables the node B 208 to exploit the spatial domain to support spatial multiplexing, beamforming, and transmit diversity.

Multiple Input Multiple Output (MIMO) is a term generally used to refer to multi-antenna technology, that is, multiple transmit antennas (multiple inputs to the channel) and multiple receive antennas (multiple outputs from the channel). MIMO systems generally enhance data transmission performance, enabling diversity gains to reduce multipath fading and increase transmission quality, and spatial multiplexing gains to increase data throughput.

Spatial multiplexing may be used to transmit different streams of data simultaneously on the same frequency. The data steams may be transmitted to a single UE 210 to increase the data rate or to multiple UEs 210 to increase the overall system capacity. This is achieved by spatially precoding each data stream and then transmitting each spatially precoded stream through a different transmit antenna on the downlink. The spatially precoded data streams arrive at the UE(s) 210 with different spatial signatures, which enables each of the UE(s) 210 to recover the one or more the data streams destined for that UE 210. On the uplink, each UE 210 may transmit one or more spatially precoded data streams, which enables the node B 208 to identify the source of each spatially precoded data stream.

Spatial multiplexing may be used when channel conditions are good. When channel conditions are less favorable, beamforming may be used to focus the transmission energy in one or more directions, or to improve transmission based on characteristics of the channel. This may be achieved by spatially precoding a data stream for transmission through multiple antennas. To achieve good coverage at the edges of the cell, a single stream beamforming transmission may be used in combination with transmit diversity.

Generally, for MIMO systems utilizing n transmit antennas, n transport blocks may be transmitted simultaneously over the same carrier utilizing the same channelization code. Note that the different transport blocks sent over the n transmit antennas may have the same or different modulation and coding schemes from one another.

On the other hand, Single Input Multiple Output (SIMO) generally refers to a system utilizing a single transmit antenna (a single input to the channel) and multiple receive antennas (multiple outputs from the channel). Thus, in a SIMO system, a single transport block is sent over the respective carrier.

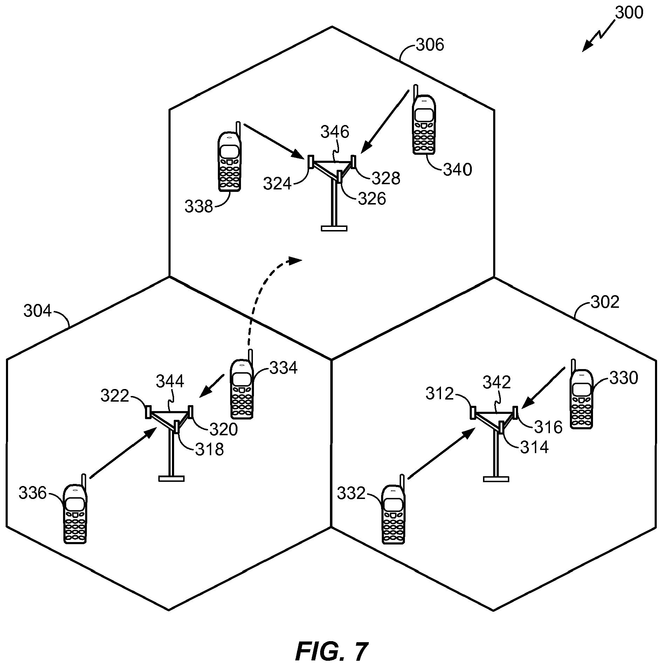

Referring to Fig. 7, an access network 300 in a UTRAN architecture is illustrated. The multiple access wireless communication system includes multiple cellular regions (cells), including cells 302, 304, and 306, each of which may include one or more sectors. The multiple sectors can be formed by groups of antennas with each antenna responsible for communication with UEs in a portion of the cell. For example, in cell 302, antenna groups 312, 314, and 316 may each correspond to a different sector. In cell 304, antenna groups 318, 320, and 322 each correspond to a different sector. In cell 306, antenna groups 324, 326, and 328 each correspond to a different sector. The cells 302, 304 and 306 may include several wireless communication devices, e.g., User Equipment or UEs, which may be in communication with one or more sectors of each cell 302, 304 or 306. For example, UEs 330 and 332 may be in communication with Node B 342, UEs 334 and 336 may be in communication with Node B 344, and UEs 338 and 340 can be in communication with Node B 346. Here, each Node B 342, 344, 346 is configured to provide an access point to a CN 204 (see Fig. 6) for all the UEs 330, 332, 334, 336, 338, 340 in the respective cells 302, 304, and 306. For example, in an aspect, the UEs of Fig. 7 may be specially programmed or otherwise configured to operate as UE 12, as described above.

As the UE 334 moves from the illustrated location in cell 304 into cell 306, a serving cell change (SCC) or handover may occur in which communication with the UE 334 transitions from the cell 304, which may be referred to as the source cell, to cell 306, which may be referred to as the target cell. Management of the handover procedure may take place at the UE 334, at the Node Bs corresponding to the respective cells, at a radio network controller 206 (see Fig. 6), or at another suitable node in the wireless network. For example, during a call with the source cell 304, or at any other time, the UE 334 may monitor various parameters of the source cell 304 as well as various parameters of neighboring cells such as cells 306 and 302. Further, depending on the quality of these parameters, the UE 334 may maintain communication with one or more of the neighboring cells. During this time, the UE 334 may maintain an Active Set, that is, a list of cells that the UE 334 is simultaneously connected to (i.e., the UTRA cells that are currently assigning a downlink dedicated physical channel DPCH or fractional downlink dedicated physical channel F-DPCH to the UE 334 may constitute the Active Set).

The modulation and multiple access scheme employed by the access network 300 may vary depending on the particular telecommunications standard being deployed. By way of example, the standard may include Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. The standard may alternately be Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE, LTE Advanced, and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

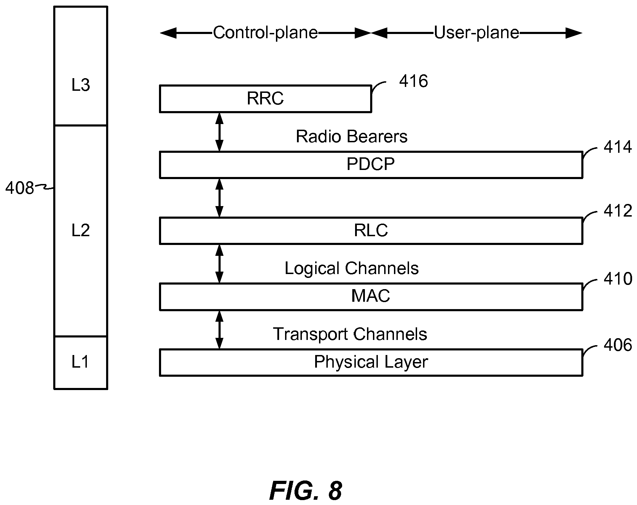

The radio protocol architecture may take on various forms depending on the particular application. An example for an HSPA system will now be presented with reference to Fig. 8. Fig. 8 is a conceptual diagram illustrating an example of the radio protocol architecture for the user and control planes.

Referring to Fig. 8, the radio protocol architecture for the UE and Node B is shown with three layers: Layer 1, Layer 2, and Layer 3. Layer 1 is the lowest lower and implements various physical layer signal processing functions. Layer 1 will be referred to herein as the physical layer 406. Layer 2 (L2 layer) 408 is above the physical layer 406 and is responsible for the link between the UE and Node B over the physical layer 406. For example, the UE corresponding to the radio protocol architecture of Fig. 8 may be specially programmed or otherwise configured to operate as UE 12, as described above.

In the user plane, the L2 layer 408 includes a media access control (MAC) sublayer 410, a radio link control (RLC) sublayer 412, and a packet data convergence protocol (PDCP) 414 sublayer, which are terminated at the node B on the network side. Although not shown, the UE may have several upper layers above the L2 layer 408 including a network layer (*e.g.,* IP layer) that is terminated at a PDN gateway on the network side, and an application layer that is terminated at the other end of the connection (*e.g.,* far end UE, server, *etc.*).

The PDCP sublayer 414 provides multiplexing between different radio bearers and logical channels. The PDCP sublayer 414 also provides header compression for upper layer data packets to reduce radio transmission overhead, security by ciphering the data packets, and handover support for UEs between node Bs. The RLC sublayer 412 provides segmentation and reassembly of upper layer data packets, retransmission of lost data packets, and reordering of data packets to compensate for out-of-order reception due to hybrid automatic repeat request (HARQ). Thus, as described, where data packets related to the call are received out-of-order and/or packets are missing due to an interruption to communicate with another network, the RLC sublayer 412 can request retransmission of the packets to recover from the interruption. The MAC sublayer 410 provides multiplexing between logical and transport channels. The MAC sublayer 410 is also responsible for allocating the various radio resources (*e.g*., resource blocks) in one cell among the UEs. The MAC sublayer 410 is also responsible for HARQ operations.

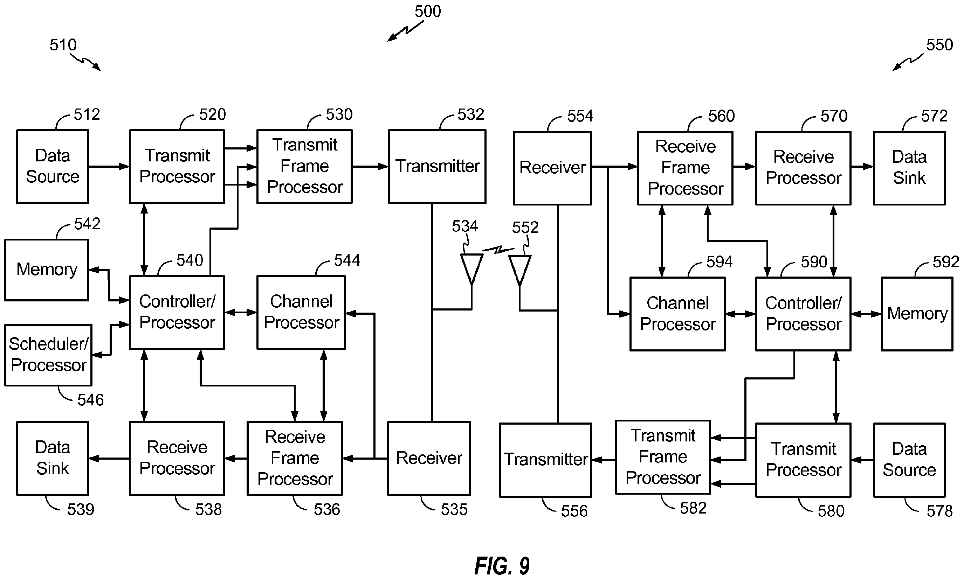

Fig. 9 is a block diagram of a Node B 510 in communication with a UE 550. For example, UE 550 may be specially programmed or otherwise configured to operate as UE 12, as described above. Further, for example, the Node B 510 may be the Node B 208 in Fig. 6, and the UE 550 may be the UE 210 in Fig. 6. In the downlink communication, a transmit processor 520 may receive data from a data source 512 and control signals from a controller/processor 540. The transmit processor 520 provides various signal processing functions for the data and control signals, as well as reference signals (*e.g*., pilot signals). For example, the transmit processor 520 may provide cyclic redundancy check (CRC) codes for error detection, coding and interleaving to facilitate forward error correction (FEC), mapping to signal constellations based on various modulation schemes (*e.g*., binary phase-shift keying (BPSK), quadrature phase-shift keying (QPSK), M-phase-shift keying (M-PSK), M-quadrature amplitude modulation (M-QAM), and the like), spreading with orthogonal variable spreading factors (OVSF), and multiplying with scrambling codes to produce a series of symbols. Channel estimates from a channel processor 544 may be used by a controller/processor 540 to determine the coding, modulation, spreading, and/or scrambling schemes for the transmit processor 520. These channel estimates may be derived from a reference signal transmitted by the UE 550 or from feedback from the UE 550. The symbols generated by the transmit processor 520 are provided to a transmit frame processor 530 to create a frame structure. The transmit frame processor 530 creates this frame structure by multiplexing the symbols with information from the controller/processor 540, resulting in a series of frames. The frames are then provided to a transmitter 532, which provides various signal conditioning functions including amplifying, filtering, and modulating the frames onto a carrier for downlink transmission over the wireless medium through antenna 534. The antenna 534 may include one or more antennas, for example, including beam steering bidirectional adaptive antenna arrays or other similar beam technologies.

At the UE 550, a receiver 554 receives the downlink transmission through an antenna 552 and processes the transmission to recover the information modulated onto the carrier. The information recovered by the receiver 554 is provided to a receive frame processor 560, which parses each frame, and provides information from the frames to a channel processor 594 and the data, control, and reference signals to a receive processor 570. The receive processor 570 then performs the inverse of the processing performed by the transmit processor 520 in the Node B 510. More specifically, the receive processor 570 descrambles and despreads the symbols, and then determines the most likely signal constellation points transmitted by the Node B 510 based on the modulation scheme. These soft decisions may be based on channel estimates computed by the channel processor 594. The soft decisions are then decoded and deinterleaved to recover the data, control, and reference signals. The CRC codes are then checked to determine whether the frames were successfully decoded. The data carried by the successfully decoded frames will then be provided to a data sink 572, which represents applications running in the UE 550 and/or various user interfaces (*e.g*., display). Control signals carried by successfully decoded frames will be provided to a controller/processor 590. When frames are unsuccessfully decoded by the receiver processor 570, the controller/processor 590 may also use an acknowledgement (ACK) and/or negative acknowledgement (NACK) protocol to support retransmission requests for those frames.

In the uplink, data from a data source 578 and control signals from the controller/processor 590 are provided to a transmit processor 580. The data source 578 may represent applications running in the UE 550 and various user interfaces (*e.g*., keyboard). Similar to the functionality described in connection with the downlink transmission by the Node B 510, the transmit processor 580 provides various signal processing functions including CRC codes, coding and interleaving to facilitate FEC, mapping to signal constellations, spreading with OVSFs, and scrambling to produce a series of symbols. Channel estimates, derived by the channel processor 594 from a reference signal transmitted by the Node B 510 or from feedback contained in the midamble transmitted by the Node B 510, may be used to select the appropriate coding, modulation, spreading, and/or scrambling schemes. The symbols produced by the transmit processor 580 will be provided to a transmit frame processor 582 to create a frame structure. The transmit frame processor 582 creates this frame structure by multiplexing the symbols with information from the controller/processor 590, resulting in a series of frames. The frames are then provided to a transmitter 556, which provides various signal conditioning functions including amplification, filtering, and modulating the frames onto a carrier for uplink transmission over the wireless medium through the antenna 552.

The uplink transmission is processed at the Node B 510 in a manner similar to that described in connection with the receiver function at the UE 550. A receiver 535 receives the uplink transmission through the antenna 534 and processes the transmission to recover the information modulated onto the carrier. The information recovered by the receiver 535 is provided to a receive frame processor 536, which parses each frame, and provides information from the frames to the channel processor 544 and the data, control, and reference signals to a receive processor 538. The receive processor 538 performs the inverse of the processing performed by the transmit processor 580 in the UE 550. The data and control signals carried by the successfully decoded frames may then be provided to a data sink 539 and the controller/processor, respectively. If some of the frames were unsuccessfully decoded by the receive processor, the controller/processor 540 may also use an acknowledgement (ACK) and/or negative acknowledgement (NACK) protocol to support retransmission requests for those frames.

The controller/processors 540 and 590 may be used to direct the operation at the Node B 510 and the UE 550, respectively. For example, the controller/processors 540 and 590 may provide various functions including timing, peripheral interfaces, voltage regulation, power management, and other control functions. The computer readable media of memories 542 and 592 may store data and software for the Node B 510 and the UE 550, respectively. A scheduler/processor 546 at the Node B 510 may be used to allocate resources to the UEs and schedule downlink and/or uplink transmissions for the UEs.

In one example, as described, controller/processor 590 can execute instructions related to, or otherwise leverage, components of UE 12 for tuning receiver 554 during one or more gaps to measure and process signals of another Node B (not shown).

Several aspects of a telecommunications system have been presented with reference to a W-CDMA system. As those skilled in the art will readily appreciate, various aspects described throughout this disclosure may be extended to other telecommunication systems, network architectures and communication standards.

By way of example, various aspects may be extended to other UMTS systems such as TD-SCDMA, High Speed Downlink Packet Access (HSDPA), High Speed Uplink Packet Access (HSUPA), High Speed Packet Access Plus (HSPA+) and TD-CDMA. Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

In accordance with various aspects of the disclosure, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, *etc.,* whether referred to as software, firmware, middleware, microcode, hardware description language, or otherwise. The software may reside on a computer-readable medium. The computer-readable medium may be a non-transitory computer-readable medium. A non-transitory computer-readable medium includes, by way of example, a magnetic storage device (*e.g.,* hard disk, floppy disk, magnetic strip), an optical disk (*e.g*., compact disk (CD), digital versatile disk (DVD)), a smart card, a flash memory device (*e.g.,* card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more."

Further, unless specifically stated otherwise, the term "some" refers to one or more. A phrase referring to "at least one of' a list of items refers to any combination of those items, including single members. As an example, "at least one of: a, b, or c" is intended to cover: a; b; c; a and b; a and c; b and c; and a, b and c. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## Claims

1. A method for communicating with multiple networks using multiple subscriptions, comprising:
establishing a call in a first network related to a first subscription over a transceiver (52);
autonomously tuning the transceiver to a frequency of a second network related to a second subscription within a defined gap during the call (54);
wherein defining the defined gap is based in part on a received or determined timing cycle of one or more idle-mode signals in the second network, and wherein the duration of the defined gap is determined based in part on radio signal conditions comprising signal quality at the second network; and
monitoring one or more channels in the second network during the defined gap for the one or more idle-mode signals (56).

2. The method of claim 1, wherein the defining the defined gap is further based in part on a time for tuning the transceiver from the first network to the second network, or a time for tuning the transceiver from the second network to the first network.

3. The method of any preceding claim, further comprising requesting retransmission of data lost from the call during the defined gap, wherein the call is a data call and the first network is a packet-switched network.

4. The method of any preceding claim, further comprising receiving the one or more idle-mode signals in the second network during the defined gap.

5. The method of any preceding claim, wherein the first network and the second network are different mobile networks of a same or a different radio access technology.

6. The method of any preceding claim, further comprising receiving a paging signal as the one or more idle-mode signals during the monitoring of the one or more channels in the second network.

7. The method of claim 6, further comprising displaying a notification related to the paging signal to allow activating communications with the second network.

8. The method of any one of claims 6 or 7, further comprising maintaining an uplink connection to the first network according to the first subscription during the monitoring of the one or more channels in the second network.

9. A user equipment (UE) apparatus for communicating with multiple networks using multiple subscriptions, comprising:
means for establishing a call in a first network related to a first subscription over a transceiver (72);
means for autonomously tuning the transceiver to a frequency of a second network related to a second subscription within a defined gap during the call (74);
means for defining the defined gap based in part on a received or determined timing cycle of one or more idle-mode signals in the second network, and for determining the duration of the defined gap based in part on radio signal conditions comprising signal quality at the second network; and
means for monitoring one or more channels in the second network during the defined gap for the one or more idle-mode signals (76).

10. The UE apparatus of claim 9, wherein the means for establishing the call requests retransmission of data lost from the call during the defined gap, wherein the call is a data call and the first network is a packet-switched network.

11. The UE apparatus of any one of claims 9 and 10, wherein the means for establishing the call receives the one or more idle-mode signals over the transceiver in the second network during the defined gap.

12. The UE apparatus of any one of claims 9 to 11, wherein the first network and the second network are different mobile networks of a same or different radio access technology.

13. A computer readable medium having stored thereon processor executable instructions that cause a computer to perform the steps of the method of any of claims 1 to 8 when executed by a computer.

## Patentansprüche

1. Ein Verfahren zum Kommunizieren mit mehreren Netzen unter Verwendung von mehreren Abonnements, aufweisend:
Herstellen eines Anrufs in einem ersten Netz, das auf ein erstes Abonnement bezogen ist, über einen Sendeempfänger (52),
autonomes Einstellen des Sendeempfängers zu einer Frequenz eines zweiten Netzes, das auf ein zweites Abonnement bezogen ist, innerhalb einer definierten Lücke während des Anrufs (54),
wobei das Definieren der definierten Lücke teilweise auf einem empfangenen oder bestimmten Timingzyklus eines oder mehrerer Ruhemodussignale in dem zweiten Netz basiert, und wobei die Dauer der definierten Lücke teilweise auf Funksignalbedingungen einschließlich der Signalqualität in dem zweiten Netz bestimmt wird, und
Überwachen eines oder mehrerer Kanäle in dem zweiten Netz während der definierten Lücke für das eine oder die mehreren Ruhemodussignale (56).

2. Verfahren nach Anspruch 1, wobei das Definieren der definierten Lücke weiterhin teilweise auf einer Zeit für das Einstellen des Sendeempfängers von dem ersten Netz zu dem zweiten Netz oder auf einer Zeit für das Einstellen des Sendeempfängers von dem zweiten Netz zu dem ersten Netz basiert.

3. Verfahren nach einem der vorstehenden Ansprüche, das weiterhin das Anfordern einer Neuübertragung von aus dem Anruf verlorenen Daten während der definierten Lücke aufweist, wobei der Anruf ein Datenanruf ist und das erste Netz ein paketvermitteltes Netz ist.

4. Verfahren nach einem der vorstehenden Ansprüche, das weiterhin das Empfangen des einen oder der mehreren Ruhemodussignale in dem zweiten Netz während der definierten Lücke aufweist.

5. Verfahren nach einem der vorstehenden Ansprüche, wobei das erste Netz und das zweite Netz verschiedene Mobilnetze mit der gleichen oder mit verschiedenen Funkzugriffstechnologien sind.

6. Verfahren nach einem der vorstehenden Ansprüche, das weiterhin das Empfangen eines Pagingsignals als des einen oder der mehreren Ruhemodussignale während des Überwachens des einen oder der mehreren Kanäle in dem zweiten Netz aufweist.

7. Verfahren nach Anspruch 6, das weiterhin das Anzeigen einer Benachrichtigung hinsichtlich des Pagingsignals, um eine Aktivierung von Kommunikationen mit dem zweiten Netz zu erlauben, aufweist.

8. Verfahren nach Anspruch 6 oder 7, das weiterhin das Aufrechterhalten einer Aufwärtsstrecken-Verbindung zu dem ersten Netz gemäß dem ersten Abonnement während des Überwachens des einen oder der mehreren Kanäle in dem zweiten Netz aufweist.

9. Eine Benutzergerät (User Equipment bzw. UE)-Vorrichtung für das Kommunizieren mit mehreren Netzen unter Verwendung von mehreren Abonnements, aufweisend:
Mittel zum Herstellen eines Anrufs in einem ersten Netz, das auf ein erstes Abonnement bezogen ist, über einen Sendeempfänger (72),
Mittel zum autonomen Einstellen des Sendeempfängers zu einer Frequenz eines zweiten Netzes, das auf ein zweites Abonnement bezogen ist, innerhalb einer definierten Lücke während des Anrufs (74),
Mittel zum Definieren der definierten Lücke teilweise basierend auf einem empfangenen oder bestimmten Timingzyklus eines oder mehrerer Ruhemodussignale in dem zweiten Netz und zum Bestimmen der Dauer der definierten Lücke teilweise basierend auf Funksignalbedingungen einschließlich der Signalqualität in dem zweiten Netz, und
Mittel zum Überwachen eines oder mehrerer Kanäle in dem zweiten Netz während der definierten Lücke für das eine oder die mehreren Ruhemodussignale (76).

10. UE-Vorrichtung nach Anspruch 9, wobei die Mittel zum Herstellen des Anrufs eine Neuübertragung von aus dem Anruf verlorenen Daten während der definierten Lücke anfordern, wobei der Anruf ein Datenanruf ist und das erste Netz ein paketvermitteltes Netz ist.

11. UE-Vorrichtung nach Anspruch 9 oder 10, wobei die Mittel zum Herstellen des Anrufs das eine oder die mehreren Ruhemodussignale über den Sendeempfänger in dem zweiten Netz während der definierten Lücke empfangen.

12. UE-Vorrichtung nach einem der Ansprüche 9 bis 11, wobei das erste Netz und das zweite Netz verschiedene Mobilnetze mit der gleichen oder mit verschiedenen Funkzugriffstechnologien sind.

13. Ein Computerlesbares Medium mit darauf gespeicherten prozessorausführbaren Befehlen, die bei einer Ausführung durch einen Computer den Computer dazu veranlassen, die Schritte des Verfahrens gemäß einem der Ansprüche 1 bis 8 durchzuführen.

## Revendications

1. Un procédé de communication avec une pluralité de réseaux au moyen d'une pluralité d'abonnements, comprenant :
l'établissement d'un appel dans un premier réseau associé à un premier abonnement par l'intermédiaire d'un émetteur-récepteur (52),
le réglage autonome de l'émetteur-récepteur sur une fréquence d'un deuxième réseau associé à un deuxième abonnement à l'intérieur d'un espace défini au cours de l'appel (54),
où la définition de l'espace défini est basée en partie sur un cycle de synchronisation déterminé ou reçu d'un ou de plusieurs signaux en mode repos dans le deuxième réseau, et où la durée de l'espace défini est déterminée en fonction en partie de conditions de signal radio comprenant une qualité de signal au niveau du deuxième réseau, et
la surveillance d'un ou de plusieurs canaux dans le deuxième réseau au cours de l'espace défini pour les un ou plusieurs signaux en mode repos (56).

2. Le procédé selon la Revendication 1, où la définition de l'espace défini est basée en outre en partie sur un temps de réglage de l'émetteur-récepteur du premier réseau vers le deuxième réseau ou un temps de réglage de l'émetteur-récepteur du deuxième réseau vers le premier réseau.

3. Le procédé selon l'une quelconque des Revendications précédentes, comprenant en outre la demande d'une retransmission de données perdues à partir de l'appel au cours de l'espace défini, où l'appel est un appel de données et le premier réseau est un réseau à commutation de paquets.

4. Le procédé selon l'une quelconque des Revendications précédentes, comprenant en outre la réception des un ou plusieurs signaux en mode repos dans le deuxième réseau au cours de l'espace défini.

5. Le procédé selon l'une quelconque des Revendications précédentes, où le premier réseau et le deuxième réseau sont des réseaux mobiles différents d'une même technologie d'accès radio ou d'une technologie d'accès radio différente.

6. Le procédé selon l'une quelconque des Revendications précédentes, comprenant en outre la réception d'un signal de radiomessagerie sous la forme des un ou plusieurs signaux en mode repos au cours de la surveillance des un ou plusieurs canaux dans le deuxième réseau.

7. Le procédé selon la Revendication 6, comprenant en outre l'affichage d'une notification reliée au signal de radiomessagerie de façon à permettre l'activation de communications avec le deuxième réseau.

8. Le procédé selon l'une quelconque des Revendications 6 ou 7, comprenant en outre le maintien d'une connexion en liaison montante vers le premier réseau en fonction du premier abonnement au cours de la surveillance des un ou plusieurs canaux dans le deuxième réseau.

9. Un appareil d'équipement d'utilisateur (UE) destiné à une communication avec une pluralité de réseaux au moyen d'une pluralité d'abonnements, comprenant :
un moyen d'établissement d'un appel dans un premier réseau associé à un premier abonnement par l'intermédiaire d'un émetteur-récepteur (72),
un moyen de réglage autonome de l'émetteur-récepteur sur une fréquence d'un deuxième réseau associé à un deuxième abonnement à l'intérieur d'un espace défini au cours de l'appel (74),
un moyen de définition de l'espace défini en fonction en partie d'un cycle de synchronisation déterminé ou reçu d'un ou de plusieurs signaux en mode repos dans le deuxième réseau, et de détermination de la durée de l'espace défini en fonction en partie de conditions de signal radio comprenant une qualité de signal au niveau du deuxième réseau, et
un moyen de surveillance d'un ou de plusieurs canaux dans le deuxième réseau au cours de l'espace défini pour les un ou plusieurs signaux en mode repos (76).

10. L'appareil UE selon la Revendication 9, où le moyen d'établissement de l'appel demande la retransmission de données perdues à partir de l'appel au cours de l'espace défini, où l'appel est un appel de données et le premier réseau est un réseau à commutation de paquets.

11. L'appareil UE selon l'une quelconque des Revendications 9 et 10, où le moyen d'établissement de l'appel reçoit les un ou plusieurs signaux en mode repos par l'intermédiaire de l'émetteur-récepteur dans le deuxième réseau au cours de l'espace défini.

12. L'appareil UE selon l'une quelconque des Revendications 9 à 11, où le premier réseau et le deuxième réseau sont des réseaux mobiles différents d'une même technologie d'accès radio ou d'une technologie d'accès radio différente.

13. Un support lisible par ordinateur possédant conservées en mémoire sur celui-ci des instructions exécutables par un processeur qui amènent un ordinateur à exécuter les opérations du procédé selon l'une quelconque des Revendications 1 à 8 lorsqu'elles sont exécutées par un ordinateur.
